(19) Europäisches Patentamt / European Patent Office / Office européen des brevets

(11) **EP 4 562 999 A1**

(12) **EUROPEAN PATENT APPLICATION**
published in accordance with Art. 153(4) EPC

(43) Date of publication:
**04.06.2025 Bulletin 2025/23**

(21) Application number: **23846949.8**

(22) Date of filing: **25.07.2023**

(51) International Patent Classification (IPC):
**A01N 37/02** (2006.01)    **A01P 21/00** (2006.01)

(52) Cooperative Patent Classification (CPC):
**A01N 37/02; A01P 21/00**

(86) International application number:
**PCT/KR2023/010714**

(87) International publication number:
**WO 2024/025290 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 KR 20220094810**
**21.07.2023 KR 20230095249**

(71) Applicant: **CJ CheilJedang Corporation**
**Seoul 04560 (KR)**

(72) Inventors:
• **KIM, Jeong Hyun**
**Seoul 04560 (KR)**
• **KANG, Yu Na**
**Seoul 04560 (KR)**

• **OH, Young Joo**
**Seoul 04560 (KR)**
• **YOON, Ki Chull**
**Seoul 04560 (KR)**
• **KIM, Gyuree**
**Seoul 04560 (KR)**
• **JANG, Robin**
**Seoul 04560 (KR)**
• **SON, Ju Yeon**
**Seoul 04560 (KR)**
• **LEE, Chang Suk**
**Seoul 04560 (KR)**
• **HWANG, Jiho**
**Seoul 04560 (KR)**

(74) Representative: **Meissner Bolte Partnerschaft mbB**
**Patentanwälte Rechtsanwälte**
**Postfach 86 06 24**
**81633 München (DE)**

(54) **PLANT GROWTH PROMOTER AND COMPOSITION FOR PROMOTING PLANT GROWTH COMPRISING SAME**

(57)     The present invention relates to a plant growth promoter containing polyhydroxyalkanoate (PHA), and a composition for promoting plant growth, the composition comprising the plant growth promoter. The plant growth promoter has excellent biodegradability, biocompatibility and the like, and thus is safe and environmentally friendly and can efficiently promote plant growth.

[Fig. 4]

EP 4 562 999 A1

## Description

## Technical Field

The present disclosure relates to a plant growth promoter that comprises a biodegradable polymer and promotes plant growth, and to a composition for promoting plant growth comprising the same.

## Background Art

Plants are constantly exposed to biotic stress caused by other organisms such as diseases and pests, as well as abiotic stress caused by changes in the physical or chemical environment such as heat, drought, and salinity. Such stress removes nutrients from the soil or causes the plant's roots to lose their ability to absorb necessary substances, which results in reduced plant growth and reduced productivity. Thus, plant growth promoters that help plants recover from stress by supplementing the elements necessary for plant growth are attracting attention.

These plant growth promoters are substances that help the growth and metabolism of plants. They act as food for soil microorganisms to increase the absorption rate of nutrients and increase the efficiency and production of chlorophyll, antioxidant action, metabolism, and moisture retention capacity of soil, thereby promoting the new growth, root development, and cell expansion of plants. Currently, commercially available plant growth promoter products contain plant hormones such as auxin, cytokinin, and gibberellin, humic acid, seaweed extracts, and the like as their main ingredients.

However, since these plant growth promoter products contain various chemical substances in addition to the main ingredients mentioned above, it has not been clearly confirmed whether the plants to which the plant growth promoters have been applied are harmless to the human body. It has also been pointed out that there are environmental problems such as soil contamination.

Accordingly, there is a need for the development of a plant growth promoter that is safe and environmentally friendly and can help the growth and metabolism of plants, thereby promoting the growth thereof.

[Prior Art Document]

[Patent Document]

(Patent Document 1) Korean Laid-open Patent Publication No. 2015-0011623

## Disclosure of Invention

## Technical Problem

The present disclosure aims to provide a plant growth promoter capable of promoting plant growth while being safe and environmentally friendly.

In addition, the present disclosure aims to provide a composition for promoting plant growth comprising the plant growth promoter.

## Solution to Problem

According to one aspect of the present disclosure to solve the above problem, there is provided a plant growth promoter that comprises a polyhydroxyalkanoate (PHA).

In an embodiment, the content of the polyhydroxyalkanoate (PHA) may be 1 to 100% by weight based on the total weight of the plant growth promoter.

In another embodiment, the polyhydroxyalkanoate (PHA) may comprise a repeat unit derived from at least one selected from the group consisting of 3-hydroxybutyrate (3HB), 4-hydroxybutyrate (4HB), 3-hydroxypropionate (3HP), 3-hydroxyhexanoate (3HH), 3-hydroxyvalerate (3HV), 4-hydroxyvalerate (4HV), 5-hydroxyvalerate (5HV), and 6-hydroxyhexanoate (6HH).

In another embodiment, the polyhydroxyalkanoate (PHA) may comprise a repeat unit derived from 4-hydroxybutyrate (4HB).

In another embodiment, the content of the repeat unit derived from 4-hydroxybutyrate (4HB) may be 1 to 80% by mole based on the total moles of the polyhydroxyalkanoate (PHA).

In another embodiment, the polyhydroxyalkanoate (PHA) may be a poly(3-hydroxybutyrate-co-4-hydroxybutyrate) copolymer comprising a repeat unit derived from 3-hydroxybutyrate (3HB) and a repeat unit derived from 4-hydroxybutyrate (4HB).

In another embodiment, the molar ratio of the repeat unit derived from 3-hydroxybutyrate (3HB) to the repeat unit derived from 4-hydroxybutyrate (4HB) may be 20:80 to 99:1.

In another embodiment, the polyhydroxyalkanoate (PHA) may have a molecular weight of 200,000 to 1,000,000 g/mole.

In another embodiment, the plant growth promoter may further comprise a biodegradable polymer.

In another embodiment, the biodegradable polymer may comprise at least one selected from the group consisting of polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), and thermoplastic starch (TPS).

In another embodiment, the biodegradable polymer may be a polylactic acid (PLA).

In another embodiment, the content of the polyhydroxyalkanoate (PHA) may be 20 to 70% by weight, and the content of the biodegradable polymer may be 30 to 80% by weight, based on the total weight of the plant growth promoter.

Meanwhile, according to another aspect of the present disclosure, there is provided a composition for promoting plant growth, which comprises a plant growth promoter comprising a polyhydroxyalkanoate (PHA).

In an embodiment, the content of the plant growth promoter may be 0.001 to 10% by weight based on the total weight of the composition for promoting plant growth.

**Advantageous Effects of Invention**

The plant growth promoter according to the present disclosure is harmless when applied to plants and soil since it contains a polyhydroxyalkanoate (PHA) with excellent biodegradability and biocompatibility. It is decomposed into organic matter in the soil, thereby increasing the activity of microorganisms in the soil while proliferating them, which makes it possible to promote root growth and enhance nutrient absorption rates of plants.

Accordingly, the present disclosure can promote plant growth while resolving safety and environmental pollution problems raised for the conventional plant growth promoters, thereby contributing to enhancing plant productivity.

**Brief Description of Drawings**

Fig. 1 shows the results of confirming the germination level (state) of barley and Lactuca sativa in Test Example 2 according to the present disclosure.

Fig. 2 shows the results of confirming the germination rate of corn in Test Example 4 according to the present disclosure.

Fig. 3 shows the results of confirming the germination rate of cucumber in Test Example 4 according to the present disclosure.

Fig. 4 shows the results of measuring the fresh weight of corn roots in Test Example 5 according to the present disclosure.

Fig. 5 shows the results of measuring the fresh weight of cucumber roots in Test Example 6 according to the present disclosure.

**Best Mode for Carrying out the Invention**

Hereinafter, the present disclosure will be described with reference to embodiments. Here, the present disclosure is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

**Plant growth promoter**

The plant growth promoter according to an embodiment of the present disclosure comprises a polyhydroxyalkanoate (PHA) with excellent biodegradability and biocompatibility.

The polyhydroxyalkanoate (PHA) has excellent biodegradability as measured according to the ISO 14855 standard (which is the ratio of the organic carbon of a test substance that has been converted into inorganic carbon in the form of gaseous $CO_2$). As a result, when applied to soil, it is biodegradable and can activate microorganisms in the soil. In addition, the polyhydroxyalkanoate (PHA) has low immunogenicity, thereby having excellent biocompatibility. Thus, when the plant growth promoter according to the present disclosure, which comprises such a polyhydroxyalkanoate (PHA), is applied to plants, it can greatly help the growth and metabolism of the plants, thereby promoting the growth of the plants. When the plants obtained thereby are consumed by humans, they may be harmless to the human body.

Specifically, the biodegradability of the polyhydroxyalkanoate (PHA) as measured according to the ISO 14855 standard may be 50% or more, 60% or more, 70% or more, or 80% or more (e.g., 50 to 100%, 50 to 95%, 50 to 90%, 55 to 90%, 60 to 85%, or 70 to 85%).

The polyhydroxyalkanoate (PHA) may comprise a repeat unit derived from at least one (at least one monomer) selected from the group consisting of 3-hydroxybutyrate (3HB), 4-hydroxybutyrate (4HB), 3-hydroxypropionate (3HP), 3-hydroxyhexanoate (3HH), 3-hydroxyvalerate (3HV), 4-hydroxyvalerate (4HV), 5-hydroxyvalerate (5HV), and 6-hydroxyhexanoate (6HH).

Specifically, the polyhydroxyalkanoate (PHA) may comprise a repeat unit derived from 4-hydroxybutyrate (4HB) (a 4HB repeat unit). As the polyhydroxyalkanoate (PHA) comprises a 4HB repeat unit, the biodegradability and growth-promoting capability of the plant growth promoter can be enhanced.

The content of the 4HB repeat unit may be 1 to 80% by mole, specifically, 1 to 75% by mole, 2 to 70% by mole, 2 to 65% by mole, 2 to 50% by mole, 3 to 60% by mole, 4 to 55% by mole, 5 to 50% by mole, 6 to 45% by mole, 8 to 40% by mole, 9 to 35% by mole, or 10 to 33% by mole, based on the total moles of the polyhydroxyalkanoate (PHA) (total moles of repeat units constituting the PHA). As the content of the 4HB repeat unit is within the above range, the biodegradability and growth-promoting capability of the plant growth promoter can be enhanced.

Specifically, the polyhydroxyalkanoate (PHA) may be a poly(3-hydroxybutyrate-co-4-hydroxybutyrate) copolymer. As a result, the biodegradability, biocompatibility, and growth-promoting capability of the plant growth promoter can be maximized.

The molar ratio of the repeat unit derived from 3-hydroxybutyrate (3HB) (a 3HB repeat unit) and the repeat unit derived from 4-hydroxybutyrate (4HB) (a 4HB repeat unit) contained in the poly(3-hydroxybutyrate-co-4-hydroxybutyrate) copolymer (molar ratio of the 3HB repeat unit to the 4HB repeat unit) is not particularly limited, but it may specifically be 20:80 to 99:1, 25:75 to 99:1, 35:65 to 99:1, 40:60 to 95:5, 45:55 to 95:5, 50:50 to 95:5, 55:45 to 95:5, 60:40 to 90:10, or 65:35 to 90:10. As the molar ratio is within the above range, the biodegradability and growth-promoting capability of the plant growth promoter can be enhanced.

Meanwhile, the crystallinity of the polyhydroxyalkanoate (PHA) may be adjusted depending on the content of the 4HB repeat unit. It may be classified into semi-crystalline PHA (scPHA) and amorphous PHA (aPHA).

Specifically, the content of the 4HB repeat unit in the scPHA may be 0.1 to 30% by mole, 1 to 25% by mole, 3 to 23% by mole, 5 to 20% by mole, 7 to 15% by mole, 8 to 13% by mole, or 9 to 11% by mole, based on the total moles of the polyhydroxyalkanoate (PHA). Specifically, the content of the 4HB repeat unit in the aPHA may be 20 to 50% by mole, 23 to 45% by mole, 25 to 43% by mole, 26 to 40% by mole, 29 to 37% by mole, 31 to 35% by mole, or 31 to 34% by mole, based on the total moles of the polyhydroxyalkanoate (PHA).

The polyhydroxyalkanoate (PHA) may be composed of the scPHA alone, the aPHA alone, or a mixture thereof.

The crystallinity of the polyhydroxyalkanoate (PHA) is not particularly limited, but it may be 90% or less, 85% or less, 80% or less, 75% or less, or 70% or less (e.g., 30 to 90%, 40 to 90%, 50 to 85%, or 60 to 80%), as measured using a differential scanning calorimeter (DSC).

The crystallization temperature ($T_c$) of the polyhydroxyalkanoate (PHA) is not particularly limited, but it may specifically be 60 to 120°C, 65 to 120°C, 70 to 115°C, 80 to 115°C, 85 to 110°C, 90 to 110°C, or 90 to 105°C. In addition, the crystallization temperature ($T_c$) of the polyhydroxyalkanoate (PHA) may not be measured.

The melting temperature ($T_m$) of the polyhydroxyalkanoate (PHA) is not particularly limited, but it may specifically be 90 to 180°C, 95 to 175°C, 100 to 170°C, 110 to 160°C, 115 to 150°C, 120 to 140°C, or 125 to 135°C. In addition, the melting temperature ($T_m$) of the polyhydroxyalkanoate (PHA) may not be measured.

The glass transition temperature ($T_g$) of the polyhydroxyalkanoate (PHA) is not particularly limited, but it may specifically be -45 to 80°C, -40 to 60°C, -35 to 50°C, -25 to 25°C, -20 to 20°C, -20 to 15°C, -15 to 10°C, or -10 to 0°C. In addition, the glass transition temperature ($T_g$) of the polyhydroxyalkanoate (PHA) may not be measured.

The molecular weight of the polyhydroxyalkanoate (PHA) (e.g., poly(3-hydroxybutyrate-co-4-hydroxybutyrate) copolymer) is not particularly limited, but it may specifically be 200,000 to 1,000,000 g/mole, 230,000 to 980,000 g/mole, 250,000 to 950,000 g/mole, 280,000 to 930,000 g/mole, 300,000 to 900,000 g/mole, 320,000 to 900,000 g/mole, 340,000 to 880,000 g/mole, 350,000 to 850,000 g/mole, 380,000 to 850,000 g/mole, 400,000 to 830,000 g/mole, or 400,000 to 800,000 g/mole. As the molecular weight of the polyhydroxyalkanoate (PHA) is within the above range, the growth promotion of plants can be enhanced.

The content of the polyhydroxyalkanoate (PHA) may be 1 to 100% by weight, specifically, 10 to 100% by weight, 15 to 100% by weight, 20 to 100% by weight, 10 to 95% by weight, 13 to 93% by weight, 15 to 90% by weight, 20 to 90% by weight, 22 to 88% by weight, 25 to 85% by weight, 25 to 80% by weight, 28 to 78% by weight, or 30 to 75% by weight, based on the total weight of the plant growth promoter. As the content of the polyhydroxyalkanoate (PHA) is within the above range, the biodegradability, biocompatibility, and growth-promoting capability of the plant growth promoter can be enhanced.

Meanwhile, the plant growth promoter according to the present disclosure may be in a powder or liquid formulation. Specifically, the plant growth promoter according to the present disclosure may have a powder formulation composed of particles of the polyhydroxyalkanoate (PHA) themselves or a dispersion formulation in which the polyhydroxyalkanoate (PHA) particles are dispersed in a solvent.

The plant growth promoter according to the present disclosure may further comprise a commonly known biodegradable polymer (BP) in addition to the polyhydroxyalkanoate (PHA). Specifically, the biodegradable polymer (BP) may be at least one selected from the group consisting of polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), and thermoplastic starch (TPS). Preferably, it may be polylactic acid (PLA).

When the plant growth promoter according to the present disclosure comprises the polyhydroxyalkanoate (PHA) and the biodegradable polymer (BP), their contents are not particularly limited, but it may comprise the polyhydroxyalkanoate (PHA) in an amount of 20 to 70% by weight (specifically, 25 to 70% by weight, 25 to 65% by weight, 28 to 60% by weight, 30 to 55% by weight, or 30 to 50% by weight) and the biodegradable polymer (e.g., polylactic acid (PLA)) in an amount of 30 to 80% by weight (specifically, 30 to 75% by weight, 35 to 75% by weight, 40 to 72% by weight, 45 to 70% by weight, or 50 to 70% by weight), based on the total weight of the plant growth promoter.

When the plant growth promoter according to the present disclosure is applied to a plant, the application amount is not particularly limited, but it may be 0.001 to 5% by weight, 0.005 to 4% by weight, 0.01 to 3% by weight, 0.05 to 2% by weight, 0.1 to 1% by weight, 0.001 to 0.1% by weight, 0.1 to 0.3% by weight, 0.3 to 0.5% by weight, or 0.5 to 3% by weight, based on the total weight of the soil in which the plant is planted. As the application amount is within the above range, the growth promotion of plants can be economically enhanced.

When the plant growth promoter according to the present disclosure is applied to soil in which plant seeds are sown, the seed germination rate may be 80% or more, 82% or more, 83% or more, 84% or more, 85% or more, 87% or more, 89% or more, 90% or more, 93% or more, 95% or more, 97% or more, or 99% or more, indicating that the plant growth promotion effect is excellent. Specifically, the seed germination rate may be 80 to 100%, 82 to 100%, 83 to 99.9%, 83 to 99.8%, 84 to 99.7%, 85 to 99.6%, 88 to 99.5%, or 90 to 99.4%.

The plant growth promoter according to the present disclosure can promote the growth of various plants. Specifically, the plant may be at least one selected from the group consisting of rice, barley, lettuce, Arabidopsis thaliana, cucumber, and corn. In particular, the plant growth promoter according to the present disclosure can promote the growth of plant roots.

Composition for promoting plant growth

The composition for promoting plant growth according to the present disclosure comprises the plant growth promoter described above. Specifically, the composition for promoting plant growth according to the present disclosure may comprise the plant growth promoter, which comprises the polyhydroxyalkanoate (PHA) described above alone, or the polyhydroxyalkanoate (PHA) and the biodegradable polymer (e.g., polylactic acid (PLA)) described above. As the composition for promoting plant growth according to the present disclosure comprises the plant growth promoter described above, when applied to soil in which plant seeds are sown, the seed germination rate is 80% or more (specifically, 80 to 100%, 82 to 99.9%, 83 to 99.8%, 84 to 99.7%, or 85 to 99.5%), thereby having very low ecotoxicity and an excellent plant growth-promoting effect, resulting in increased plant productivity.

The content of the plant growth promoter contained in the composition for promoting plant growth may specifically be 0.001 to 10% by weight, 0.005 to 5% by weight, 0.007 to 3% by weight, 0.009 to 2% by weight, or 0.01 to 1% by weight, based on the total weight of the composition for promoting plant growth.

Meanwhile, the composition for promoting plant growth according to the present disclosure may further comprise an additive (active ingredient) that can help plant growth. Specifically, the additive may comprise at least one selected from the group consisting of plant growth regulators, fungicides, insecticides, acaricides, nematicides, and herbicides.

The plant growth regulator may specifically be at least one selected from the group consisting of L-glutamic acid, L-proline, aminoethoxyvinylglycine, chlormequat, chlorpropham, cyclanilide, dikegulac, daminozide, ethephon, flurprimidol, flumetralin, forchlorfenuron, gibberellin, maleic acid hydrazide salt, mepiquat chloride, methylcyclopropene, benzylaminopurine, paclobutrazol, prohexadione, thidiazuron, tributyl phosphorotrithioate, trinexapac ethyl, and uniconazole.

The fungicide may specifically be at least one selected from the group consisting of benzimidazole-based compounds, succinic acid dehydrogenase inhibition compounds (SDHI-based compounds), strobilurin-based compounds, phenylamide-based compounds, dicarboxyimide-based compounds, anilinopyrimidine-based compounds, carbamate-based compounds, quinoline-based compounds, organophosphorus-based compounds, and carboxamide-based compounds.

The insecticide may specifically be at least one selected from the group consisting of carbamate-based compounds, pyrethroid-based compounds, neritoxin compounds, neonicotinoid compounds, benzoylurea compounds, and organochlorine compounds.

The acaricide may specifically be at least one selected from the group consisting of acequinocyl, amidoflumet, amitraz, azocyclotine, bifenazate, bromopropylate, chlorfenone, chinomethionate, phenisobromate, benzoximate, clofentezine, cyanopyrafen, cyflumetofen, cyhexatin, diplovidazine, dienochlor, ethoxazole, phenazaquin, fenbutatin oxide, fenpyroximate, phenothiocarb, fluacrypyrim, hexythiazox, propazite (BPPS), piflubumide, pyridaben, pyrimidifen, spirodiclofen, spiromesifen, tebufenpyrad, tetradiphone, asainonapyr, sietepyrafen, and flupentiophenox.

The nematicide may specifically be at least one selected from the group consisting of 1,3-dichloropropene (D-D), dichloro diisopropyl ether (DCIP), methyl isothiocyanate, cadusaphos, fosthiazate, imiciaphos, nemadectin, cyclobuttripluram, and thioxazaphene.

The herbicide may specifically be at least one selected from the group consisting of amino acid-based compounds, cyclohexanedione-based compounds, acetamide-based compounds, bipyridyllium-based compounds, aryloxyphenoxypropionic acid-based compounds, carbamate-based compounds, pyridine-based compounds, urea-based compounds, dinitroaniline-based compounds, phenoxyacetic acid-based compounds, and triazine-based compounds.

In addition, the composition for promoting plant growth according to the present disclosure may further comprise an aqueous solvent (e.g., purified water, etc.) and/or soil to adjust its concentration (or viscosity).

The composition for promoting plant growth according to the present disclosure can exhibit a growth-promoting effect on all general plants. Specifically, examples of the plant include Gramineae such as rice, wheat, barley, rye, oats, triticale, corn, sorghum, sugarcane, turfgrass, bentgrass, Bermuda grass, fescue, and ryegrass; Cruciferae such as Arabidopsis thaliana; Leguminosae such as soybeans, peanuts, kidney beans, peas, and adzuki beans; Convolvulaceae such as sweet potato; Solanaceae such as peppers, green peppers, tomatoes, eggplants, and potatos; Polygonaceae such as buckwheat; Compositae such as lettuce and sunflower; Araliaceae such as ginseng; Brassicaceae such as rapeseed, Chinese cabbage, turnip, cabbage, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, cherry, peach, and pear; Umbelliferae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Arecaceae such as coconut palm and date palm; Rutaceae such as tangerine, orange, grapefruit, and lemon; Vitaceae such as grapes; and flowers and ornamental plants, non-fruit trees, and other ornamental plants. In particular, the composition for promoting plant growth according to the present disclosure can have an excellent effect in promoting the growth of monocotyledonous plants such as Gramineae (e.g., barley and corn) and dicotyledonous plants such as Cucurbitaceae (e.g., cucumber) and Cruciferae (e.g., Arabidopsis thaliana).

### Mode for the Invention

Hereinafter, the present disclosure will be described in detail with reference to Examples, but the scope of the present disclosure is not limited to the Examples.

### Example 1

A plant growth promoter comprising 100% by weight of a semi-crystalline polyhydroxyalkanoate (scPHA, P(3HB-co-4HB) copolymer) having a ratio of 10% by mole of a 4HB repeat unit and a molecular weight of approximately 400,000 g/mole was prepared.

### Example 2

A plant growth promoter comprising 100% by weight of a semi-crystalline polyhydroxyalkanoate (scPHA, P(3HB-co-4HB) copolymer) having a ratio of 10% by mole of a 4HB repeat unit and a molecular weight of approximately 800,000 g/mole was prepared.

### Example 3

A plant growth promoter comprising 100% by weight of an amorphous polyhydroxyalkanoate (aPHA, P(3HB-co-4HB) copolymer) having a ratio of 33% by mole of a 4HB repeat unit and a molecular weight of approximately 600,000 g/mole was prepared.

**Example 4**

A plant growth promoter comprising 70% by weight of a polylactic acid (Natureworks, M4032) and 30% by weight of an amorphous polyhydroxyalkanoate (aPHA, P(3HB-co-4HB) copolymer) having a ratio of 33% by mole of a 4HB repeat unit and a molecular weight of approximately 400,000 g/mole was prepared.

**Example 5**

A plant growth promoter comprising 50% by weight of a polylactic acid (Natureworks, M4032) and 50% by weight of an amorphous polyhydroxyalkanoate (aPHA, P(3HB-co-4HB) copolymer) having a ratio of 33% by mole of a 4HB repeat unit and a molecular weight of approximately 450,000 g/mole was prepared.

**Comparative Example 1**

A plant growth promoter comprising 100% by weight of a polylactic acid (PLA) (Nature Works, M4032) was prepared.

**Comparative Example 2**

A plant growth promoter comprising 100% by weight of a polyhydroxybutyrate-co-hydroxyvalerate (PHBV, P(3HB-co-3HV) copolymer) (Tianan, China) was prepared.

**Comparative Example 3**

A plant growth promoter comprising 100% by weight of a polybutylene adipate-co-terephthalate (PBAT) (ANKOR, Korea) was prepared.

**Control Comparative Example 1**

Natural soil prepared according to the EN17033 standard was applied. Specifically, the soil was collected from a rice cultivation area in Cheorwon-gun, Gangwon province. The physicochemical properties of the collected soil are as shown in Table 1 below.

[Table 1]

| | pH | EC | Orga nic substance | Total nitrogen | Ca | Mg | K | Na | Particle size distribution | | | Soil property |
| --- | --- | --- | --- | --- | --- | --- | --- | --- | --- | --- | --- | --- |
| | | | | | | | | | clay | sand | silt | |
| | W:1:5 | dS/m | % | | cmol/kg | | | | % | | | |
| Investigated area | 6.74 | 0.02 | 1.70 | 0.11 | 0.70 | 0.29 | 1.52 | 0.11 | 28.59 | 6.27 | 65.16 | SiCL |
| Field soil | 5.80 | - | 1.90 | - | 4.60 | 1.40 | 0.59 | - | - | - | - | - |
| Mountain soil | 4.80 | - | 6.40 | - | 2.27 | 0.70 | 0.25 | - | - | - | - | - |

**Control Comparative Example 2**

The standard material (Sigma-Aldrich, PHB standard material) in accordance with EN17033 was used.

The examples, comparative examples, and control comparative examples are summarized in Table 2 below.

[Table 2]

| | Composition of the promoter or soil | Composition and physical properties of the PHA contained in the promotor | | | | | |
|---|---|---|---|---|---|---|---|
| | | 3HB (% by mole) | 4HB (% by mole) | Mw (g/mole) | Tg (°C) | Tm (°C) | Tc (°C) |
| Ex. 1 | scPHA 100% by weight | 90 | 10 | 400,000 | -7.14 | 141.03 | 97.56 |
| Ex. 2 | scPHA 100% by weight | 90 | 10 | 800,000 | -10.27 | 136.44 | 90.02 |
| Ex. 3 | aPHA 100% by weight | 67 | 33 | 600,000 | - | - | - |
| Ex. 4 | aPHA:PLA = 30:70% by weight | 67 | 33 | 400,000 | -1.95 | 99.70 | - |
| Ex. 5 | aPHA:PLA = 50:50% by weight | 67 | 33 | 450,000 | -16.99 | 99.55 | - |
| C. Ex. 1 | PLA 100% by weight | - | - | 210,000 | 60.1 | - | - |
| C. Ex. 2 | PHBV 100% by weight | - | - | - | 1.18 | 171.2 | 117.2 |
| C.Ex. 3 | PBAT 100% by weight | - | - | - | - | - | - |
| C. C. Ex. 1 | Natural soil | Natural soil prepared according to the EN17033 standard | | | | | |
| C. C. Ex. 2 | PHB | Standard material prepared according to the EN17033 standard | | | | | |

**Test Example 1. Evaluation of germination rates 1**

Barley, which is a monocotyledonous plant, and lettuce, which is a dicotyledonous plant, were sown in the soil, and their germination rates were evaluated. Specifically, treatment groups in which 50 seeds of barley and 50 seeds of lettuce had been sown, respectively, were placed in a growth chamber with controllable temperature, humidity, and light conditions. Germination was observed for approximately three days. For the treatment groups, natural soil was mixed with a plant growth promoter in the form of powder in an amount of 1.0% by weight relative to the total weight of the soil, which was stored in a temperature- and humidity-controlled chamber (23°C and 60% RH). The soil with a biodegradability of over 50% (a moisture content of approximately 10% (w/w)) was used. In addition, the germination conditions of the growth chamber were as follows.

Germination (growth) temperature of barley seeds and lettuce seeds: $25 \pm 2$°C
Humidity: 40 to 60%

According to prior art references, when the germination rate of Control Comparative Example 1 exceeds 90%, it is interpreted that the ecotoxicity of the substance is low. If the germination rate of the examples is confirmed to be equal to, or higher than, that of Control Comparative Example 1, it is understood that a germination-promoting result is achieved.
After evaluation, the germination rate was converted into a percentage according to the following Equation 1. The results are shown in Tables 3 and 4 below.

$$[\text{Equation 1}]$$

$$\text{Germination rate (\%)} = S_1/S_t \times 100$$

$S_t$: the number of seeds sown in the treatment group
$S_1$: the number of germinated seeds among the number of seeds sown in the treatment group (seeds with young roots (radicles) or young shoots (plumules) were counted as germinated seeds)

[Table 3]

| Lettuce | Germination rate (%) | |
|---|---|---|
| | Average | Standard deviation |
| Control Comparative Example 1 | 75.34 | 3.09 |
| Control Comparative Example 2 | 74 | 3.56 |
| Example 1 | 85.34 | 1.70 |
| Example 2 | 87.34 | 2.05 |

[Table 4]

| Barley | Germination rate (%) | |
|---|---|---|
| | Average | Standard deviation |
| Control Comparative Example 1 | 97.34 | 0.94 |
| Control Comparative Example 2 | 98.66 | 0.47 |
| Example 1 | 99.34 | 0.47 |

Referring to Tables 3 and 4 above, it is confirmed that Examples 1 and 2, in which the plant growth promoters according to the present disclosure were each used, had a germination rate equal to, or higher than, that of Control Comparative Examples 1 and 2, indicating that a plant growth promotion effect was achieved.

**Test Example 2. Evaluation of germination rates 2**

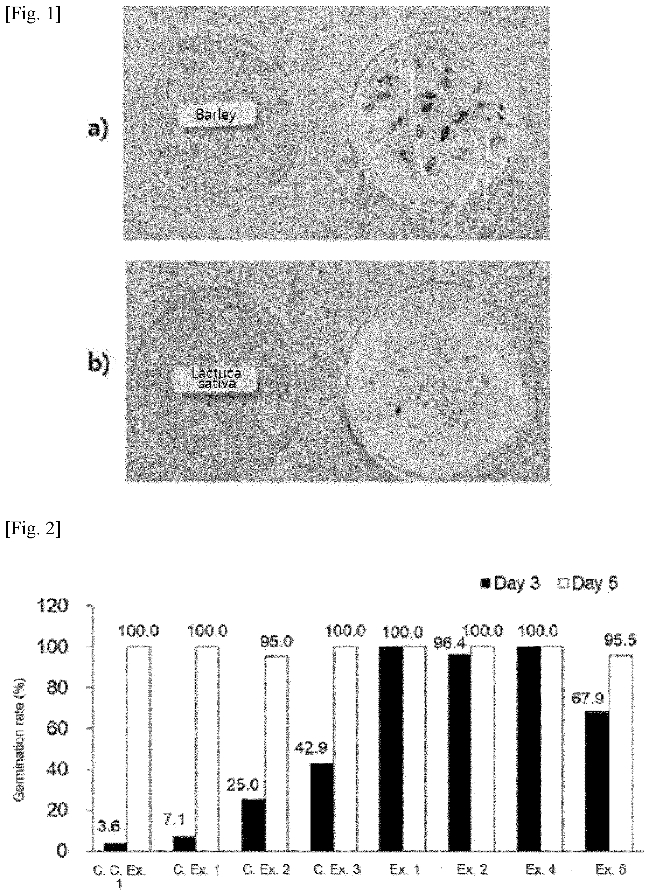

Barley, which is a monocotyledonous plant, and Lactuca sativa, which is a dicotyledonous plant, were sown in petri dishes, and their germination rates were evaluated. Specifically, the surfaces of barley seeds and Lactuca sativa seeds were disinfected with 3% $H_2O_2$ and washed three times with distilled water. A sample with a concentration of 1% (a composition in which the plant growth promoter of Example 1 was diluted in purified water) was placed on the filter paper in a petri dish, the sterilized seeds were aligned in each petri dish, and it was then sealed with paraffin and cultured in a dark place at 23°C for 3 days. Three days after the initiation of cultivation, roots were observed to have grown from the seeds. The results are shown in Fig. 1.
Fig. 1(a) shows the germination level of barley seeds, and Fig. 1(b) shows the germination level of Lactuca sativa seeds. It is confirmed that roots have grown from the seeds and that germination has taken place well.

**Test Example 3. Evaluation of dry weight yield**

The same treatment group as that used in Test Example 1 was prepared. 50 seeds of lettuce and 50 seeds of barley were sown, respectively, and grown at room temperature for 14 days. Thereafter, the grown lettuce and barley were harvested and dried at 65°C to remove moisture. The weight of the resulting dried matter was measured. Thereafter, the measured results are shown in Tables 5 and 6 below.

[Table 5]

| Lettuce | Dry weight yield (g) | |
|---|---|---|
| | Average | Standard deviation |
| Control Comparative Example 1 | 4.07 | 0.35 |
| Control Comparative Example 2 | 4.08 | 0.13 |
| Example 1 | 4.08 | 0.07 |
| Example 2 | 4.09 | 0.08 |

[Table 6]

| Barley | Dry weight yield (g) | |
|---|---|---|
| | Average | Standard deviation |
| Control Comparative Example 1 | 4.55 | 0.0 |
| Control Comparative Example 2 | 4.49 | 0.08 |
| Example 1 | 4.57 | 0.15 |

Referring to Tables 5 and 6 above, it is confirmed that Examples 1 and 2, in which the plant growth promoters according to the present disclosure were each used, had a weight of the dried matter equal to, or higher than, that of Control Comparative Examples 1 and 2, indicating that a plant growth promotion effect was achieved.

**Test Example 4. Evaluation of germination rates 3**

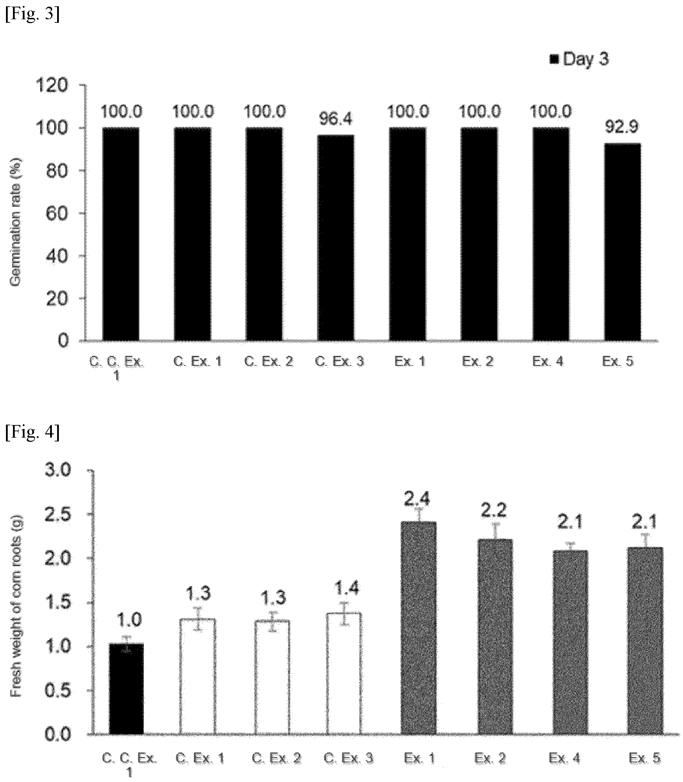

Corn and cucumber seeds were sown in the soil, and their germination rates were evaluated. Specifically, treatment groups in which corn seeds and cucumber seeds had been sown, respectively, were placed in a growth chamber with controllable temperature, humidity, and light conditions, and germination was observed. The results are shown in Figs. 2 and 3. For the treatment groups, natural soil was mixed with a plant growth promoter in the form of powder in an amount of 0.1% by weight relative to the total weight of the soil, which was stored in a temperature- and humidity-controlled chamber (23°C and 60% RH). The soil with a biodegradability of over 50% (a moisture content of approximately 10% (w/w)) was used. In addition, the germination conditions of the growth chamber were as follows.

Germination (growth) temperature of corn seeds and cucumber seeds: 25°C
Humidity: 60%
Light: 16 hr / shade: 8 hr

Fig. 2 shows the results of evaluating the germination rate of cucumber, and Fig. 3 shows the results of evaluating the germination rate of corn. Referring to these results, it is confirmed that Examples 1, 2, 4, and 5, in which the plant growth promoters according to the present disclosure were each used, had a germination rate equal to, or higher than, that of Control Comparative Examples 1 and Comparative Examples 1 to 3, indicating that a plant growth promotion effect was achieved. In particular, referring to the results of evaluating the germination rate of cucumber, it is confirmed that when the plant growth promoter according to the present disclosure is used, germination takes place within a relatively short period of time (within 3 days), and the plant growth promoter of the present disclosure can increase the germination rate.

**Test Example 5. Evaluation of plant growth promotion effect 1**

The growth promotion effect of corn was evaluated using a soil fertilizer application method. Specifically, a treatment group in which corn seeds had been sown was placed in a growth chamber with controllable temperature, humidity, and light conditions. Growth was observed for approximately two weeks. For the treatment groups, natural soil was mixed with a plant growth promoter in the form of powder in an amount of 0.1% by weight relative to the total weight of the soil, which was stored in a temperature- and humidity-controlled chamber (23°C and 60% RH). The soil with a biodegradability of over 50% (a moisture content of approximately 10% (w/w)) was used. In addition, the growth conditions of the growth chamber were as follows. Upon growth, the fresh weight (live weight) of corn roots was measured. The results are shown in Fig. 4.

Germination (growth) temperature of corn seeds: 25°C
Humidity: 60%

Referring to Fig. 4, it is confirmed that Examples 1, 2, 4, and 5, in which the plant growth promoters according to the present disclosure were each used, had a fresh weight of corn roots greater than that of Comparative Examples 1 to 3 by 60 to 80%, indicating that an excellent plant growth promotion effect was achieved.

**Test Example 6. Evaluation of plant growth promotion effect 2**

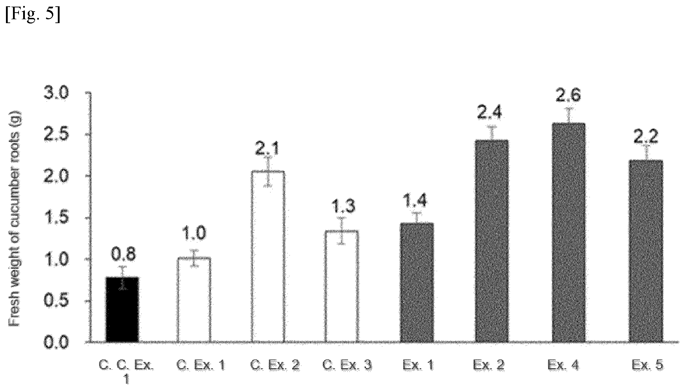

The growth promotion effect of cucumber was evaluated using a soil fertilizer application method. Specifically, a treatment group in which cucumber seeds had been sown was placed in a growth chamber with controllable temperature, humidity, and light conditions. Growth was observed for approximately 20 days. For the treatment groups, natural soil was mixed with a plant growth promoter in the form of powder in an amount of 0.1% by weight relative to the total weight of the soil, which was stored in a temperature- and humidity-controlled chamber (23°C and 60% RH). The soil with a biodegradability of over 50% (a moisture content of approximately 10% (w/w)) was used. In addition, the growth conditions of the growth chamber were as follows. Upon growth, the fresh weight (live weight) of cucumber roots was measured. The results are shown in Fig. 5.

Germination (growth) temperature of cucumber seeds: 25°C
Humidity: 60%

Referring to Fig. 5, it is confirmed that Examples 1, 2, 4, and 5, in which the plant growth promoters according to the present disclosure were each used, had a fresh weight of cucumber roots greater than that of Comparative Examples 1 to 3 by 40 to 160%, indicating that an excellent plant growth promotion effect was achieved.

## Claims

1. A plant growth promoter, which comprises a polyhydroxyalkanoate (PHA).

2. The plant growth promoter of claim 1, wherein the content of the polyhydroxyalkanoate (PHA) is 1 to 100% by weight based on the total weight of the plant growth promoter.

3. The plant growth promoter of claim 1, wherein the polyhydroxyalkanoate (PHA) comprises a repeat unit derived from at least one selected from the group consisting of 3-hydroxybutyrate (3HB), 4-hydroxybutyrate (4HB), 3-hydroxypropionate (3HP), 3-hydroxyhexanoate (3HH), 3-hydroxyvalerate (3HV), 4-hydroxyvalerate (4HV), 5-hydroxyvalerate (5HV), and 6-hydroxyhexanoate (6HH).

4. The plant growth promoter of claim 1, wherein the polyhydroxyalkanoate (PHA) comprises a repeat unit derived from 4-hydroxybutyrate (4HB).

5. The plant growth promoter of claim 4, wherein the content of the repeat unit derived from 4-hydroxybutyrate (4HB) is 1 to 80% by mole based on the total moles of the polyhydroxyalkanoate (PHA).

6. The plant growth promoter of claim 1, wherein the polyhydroxyalkanoate (PHA) is a poly(3-hydroxybutyrate-co-4-hydroxybutyrate) copolymer comprising a repeat unit derived from 3-hydroxybutyrate (3HB) and a repeat unit derived from 4-hydroxybutyrate (4HB).

7. The plant growth promoter of claim 6, wherein the molar ratio of the repeat unit derived from 3-hydroxybutyrate (3HB) to the repeat unit derived from 4-hydroxybutyrate (4HB) is 20:80 to 99:1.

8. The plant growth promoter of claim 1, wherein the polyhydroxyalkanoate (PHA) has a molecular weight of 200,000 to 1,000,000 g/mole.

9. The plant growth promoter of claim 1, which further comprises a biodegradable polymer.

10. The plant growth promoter of claim 9, wherein the biodegradable polymer comprises at least one selected from the group consisting of polylactic acid (PLA), polyvinyl alcohol (PVOH), ethylene vinyl alcohol (EVOH), polybutylene-adipate-co-terephthalate (PBAT), polybutylene succinate (PBS), polycaprolactone (PCL), and thermoplastic starch (TPS).

11. The plant growth promoter of claim 9, wherein the biodegradable polymer is a polylactic acid (PLA).

12. The plant growth promoter of claim 9, wherein the content of the polyhydroxyalkanoate (PHA) is 20 to 70% by weight, and the content of the biodegradable polymer is 30 to 80% by weight, based on the total weight of the plant growth promoter.

13. A composition for promoting plant growth, which comprises the plant growth promoter according to any one of claims 1 to 12.

**14.** The composition for promoting plant growth of claim 13, wherein the content of the plant growth promoter is 0.001 to 10% by weight based on the total weight of the composition for promoting plant growth.

[Fig. 1]

[Fig. 2]

[Fig. 3]

[Fig. 4]

[Fig. 5]

## INTERNATIONAL SEARCH REPORT

| International application No. |
| --- |
| **PCT/KR2023/010714** |

| **A.** | **CLASSIFICATION OF SUBJECT MATTER** |
| --- | --- |

**A01N 37/02**(2006.01)i; **A01P 21/00**(2006.01)i

According to International Patent Classification (IPC) or to both national classification and IPC

| **B.** | **FIELDS SEARCHED** |
| --- | --- |

Minimum documentation searched (classification system followed by classification symbols)

A01N 37/02(2006.01); A01G 24/15(2018.01); A01G 24/25(2018.01); C08G 63/06(2006.01); C08J 5/18(2006.01); C08L 67/04(2006.01); C09K 17/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리히드록시 알카노에이트(polyhydroxyalkanoates, PHAs), 식물 생장(plant growth)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | WO 2009-011905 A1 (KOSINSKI, L. et al.) 22 January 2009 (2009-01-22)<br>    See abstract; and claims 1, 7, 9 and 15. | 1-2,9-14 |
| Y | | 3-8 |
| Y | KR 10-2022-0053784 A (CJ CHEILJEDANG CORPORATION) 02 May 2022 (2022-05-02)<br>    See abstract; and claim 1. | 3-8 |
| A | WO 2020-117062 A1 (FOAMPLANT B.V.) 11 June 2020 (2020-06-11)<br>    See entire document. | 1-14 |
| A | PRADHAN, A. et al. Effect of polyhydroxyalkanoates accumulated plant growth promoting Bacillus sp. on germination and growth of Mung Bean & Groundnut. RESEARCH JOURNAL OF PHARMACEUTICAL BIOLOGICAL AND CHEMICAL SCIENCES. 2017, vol. 8, no. 4, pp. 789-797.<br>    See entire document. | 1-14 |

✓ Further documents are listed in the continuation of Box C.     ✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 October 2023** | **30 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/010714** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0111186 A (CJ CHEILJEDANG CORPORATION) 10 September 2021 (2021-09-10)<br>See abstract; and claims 1-16. | 1-14 |

Form PCT/ISA/210 (second sheet) (July 2022)

**INTERNATIONAL SEARCH REPORT**
Information on patent family members

International application No.

**PCT/KR2023/010714**

| Patent document cited in search report | | | Publication date (day/month/year) | Patent family member(s) | | | Publication date (day/month/year) |
|---|---|---|---|---|---|---|---|
| WO | 2009-011905 | A1 | 22 January 2009 | EP | 2173835 | A1 | 14 April 2010 |
| | | | | US | 2009-0019765 | A1 | 22 January 2009 |
| KR | 10-2022-0053784 | A | 02 May 2022 | CN | 116390987 | A | 04 July 2023 |
| | | | | EP | 4234604 | A1 | 30 August 2023 |
| | | | | KR | 10-2023-0088664 | A | 20 June 2023 |
| | | | | WO | 2022-086229 | A1 | 28 April 2022 |
| WO | 2020-117062 | A1 | 11 June 2020 | CN | 113163723 | A | 23 July 2021 |
| | | | | EP | 3890471 | A1 | 13 October 2021 |
| | | | | JP | 2022-511890 | A | 01 February 2022 |
| | | | | KR | 10-2021-0098516 | A | 10 August 2021 |
| | | | | NL | 2022153 | B1 | 02 July 2020 |
| | | | | US | 2021-0329859 | A1 | 28 October 2021 |
| KR | 10-2021-0111186 | A | 10 September 2021 | WO | 2023-008902 | A1 | 02 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20150011623